# EUROPEAN PATENT SPECIFICATION

(11) **EP 1 448 010 B1**
(45) Date of publication and mention of the grant of the patent: **27.07.2005**
(21) Application number: 03290367.6
(22) Date of filing: 15.02.2003
(51) Int. Cl.: H04Q 7/38

(54) **A method of performing a handover or reselection procedure**
Verfahren zum Durchführen einer Handover- oder Wiederwahlprozedur
Procédé pour exécuter une procédure de transfert ou de resélection

(43) Date of publication of application: 18.08.2004
(73) Proprietor: ALCATEL, 75008 Paris (FR)
(72) Inventor: Diaz Cervera, José, 70435 Stuttgart-Zuffenhausen (DE); Warich, Anja, 70499 Suttgart (DE); Sigle, Rolf, 71384 Weinstadt (DE); Fechter, Frank, 70825 Korntal-Münchingen (DE)
(74) Representative: Rausch, Gabriele, Dr.

(56) References cited:
- EP-A- 1 104 214
- WO-A-00/38465
- WO-A-00/60891
- WO-A-01/47298
- LOUKAS N H ET AL: "Design and IN-based modeling of handover protocols for UMTS" VEHICULAR TECHNOLOGY CONFERENCE, 1997, IEEE 47TH PHOENIX, AZ, USA 4-7 MAY 1997, NEW YORK, NY, USA,IEEE, US, 4 May 1997 (1997-05-04), pages 324-328, XP010228804 ISBN: 0-7803-3659-3

## Description

### Field of the invention

The present invention relates to the field of wireless cellular telecommunication, and more particularly without limitation to handover and/or reselection procedures.

### Background and prior art

The act of transferring communication with a subscriber station from one base station to another is referred to as handover or reselection in prior art wireless cellular telecommunication systems, such as GSM, UMTS, ... Generally the term handover is used for voice communication and the term reselection is used for packetized data transmission. The various handover or reselection procedures are specified in the applicable standards for cellular wireless telecommunication systems such as GSM and UMTS.

For example US Patent No. 6,466,556 shows a handover method which aims to provide only a small interruption in packet flow during handover. In addition to handover and reselection procedures within a given cellular wireless telecommunication system it is also known that such procedures can be implemented for inter-system handovers. For example, the document TSGR3#(99)544 of the TSG-RAN working group 3
(http://www.3gpp.org/ftp/tsg_ran/WG3_lu/TSGR3_04/Docs/Pdf/r3-99544.PDF) shows a handover signalling procedure for handover from GSM to UMTS.

EP 1 104 214 A1 shows a logical channel control procedure for handover in a GSM network. The source GSM radio gateway provides a candidate list of handover targets to a gate keeper. The gate keeper selects the first candidate target GSM radio gateway on this candidate list in order to attempt a handover.

WO 00/60891 shows a system for facilitating a multi-mode multi-pilot hard handoff in a CDMA system. An extension of the ANSI-41 and CDG IOS A-interface specifications to include reference target cell information is disclosed.

A common disadvantage of known handover and reselection procedures is that handover sometimes fails such that the telecommunication link is interrupted. The present invention therefore aims to provide an improved method of performing a handover or reselection procedure as well as a controller for a wireless cellular telecommunication system.

### Summary of the invention

The present invention provides a method of performing a handover or reselection procedure for a wireless telecommunication device, such as a mobile phone or other user equipment. In order to perform a handover or reselection a number of potential handover target cells are identified from the source system. These potential handover target cells are communicated to the target system.

The target system itself selects one of the potential handover target cells and informs the source system of its selection. In response the source system initiates the handover or reselection procedure of the wireless telecommunication device.

The present invention is particularly advantageous in that it enables to increase the reliability of handover and reselection procedures. In contrast to the prior art not the source system but the target system selects the target cell for performing the handover or reselection. This way it can be avoided that a target cell is selected which provides coverage to the wireless telecommunication device but has no more capacity to accommodate the telecommunication link to be handed over. In addition the selection of the target cell can be performed by the target system in order to perform load balancing between potential handover target cells which have the capacity to become serving cells for the telecommunication link to be handed over.

In accordance with a preferred embodiment of the invention the potential handover target cells are identified by the wireless telecommunication device. For example the wireless telecommunication device periodically scans one or several frequency bands in order to identify neighbouring cells which provide alternative coverage to the wireless telecommunication device. In addition the field strength can be measured in order to provide a quality criterion for any of the neighbouring cells providing the coverage.

The wireless telecommunication device can communicate these potential handover target cells to a controller of its source system. This can be done by providing the controller of the source system with a list of the cell IDs of the potential handover target cells which have been identified by the wireless telecommunication device. Preferably, some information about the quality of reception from the different cells should also be included in the list. The controller of the source system can then forward the list of cell IDs of the potential handover target cells to the controller of the target system. The controller of the target system can then select one of the cells from the list of cell IDs which is most suitable for accommodating the telecommunication link to be handed over. The controller of the target system signals its selection of this target cell to the controller of the source system. In response the controller of the source system can initiate a handover or reselection procedure to the identified target cell.

In accordance with a further preferred embodiment of the invention more than one target system is involved. This case becomes practical when the wireless telecommunication device determines potential handover target cells which belong to different target systems.

In this case, the controller of the source system forwards at least one cell ID of a potential handover target cell to each one of the respective target systems. Each one of the target systems can then check whether the identified potential handover target cell is presently able to become a serving cell for the telecommunication link to be handed over.

For example one of the target systems refuses the handover or reselection request as the identified potential handover target cell of that target system is already running at full capacity. The other target system accepts the handover request as the potential handover target cell of that target system still has free capacity in the scenario considered here. In this instance the controller of the source system initiates the handover procedure to the target cell of the target system with the free capacity. This way it can be avoided that a handover or reselection to the target cell is initiated which would have failed and which would have likely resulted in an interruption of the telecommunication link to be handed over.

If more than one target system sends an acceptance of the handover request, the controller of the source system can make a selection. This selection can be random or it can be based on additional quality criteria, such as the respective field strength measured by the wireless telecommunication device, the load situation in the target cells which is communicated from the target systems to the controller of the source system or load balancing criteria.

In accordance with a further preferred embodiment of the invention the source system and the target system have different air interfaces. In order to perform an inter-system handover or reselection a dual or multiple mode wireless telecommunication device is required which supports the different air interfaces. While operating in the source system the wireless telecommunication device identifies potential handover target cells in the target system by scanning the frequency spectrum by means of the alternative air interface of the target system. Alternatively the source system has a priori knowledge of the potential handover target cells of the target system as the network topologies of the source system and the target system are fixed and covering overlapping regions. Such an inter-system handover can be initiated by the source system when the source system reaches its capacity limit such that some of the telecommunication traffic of the source system is taken over by the target system to free capacity of the source system. Another trigger for inter-system handover is the loss or degradation of coverage in the mobile terminal.

In general, the selection of the target cell by the target system from the list of potential handover target cells provided by the source system is advantageous as the target system has up-to-date information on the status of its cells and can therefore make an informed decision regarding the selection of one of the potential handover target cells.

### Brief description of the drawings

In the following preferred embodiments of the present invention are described in greater detail by making reference to the drawings, in which:
- Figure 1: is a block diagram of a source system and a target system,
- Figure 2: is a block diagram of a source system and two target systems,
- Figure 3: is a block diagram of source and target systems having different air interfaces,
- Figure 4: is illustrative of a flow chart of a method of performing a handover procedure.

### Detailed description

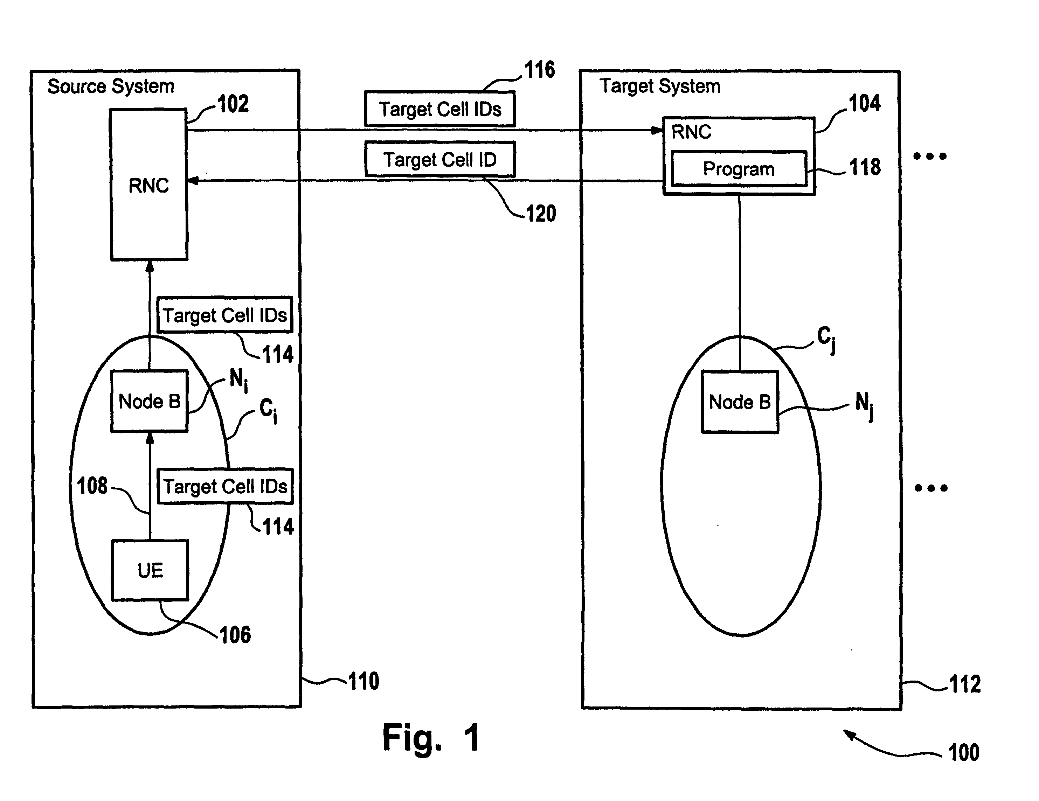

Figure 1 shows a block diagram of a wireless cellular telecommunication system 100, such as a UMTS-type system. Telecommunication system 100 has a number of radio network controllers (RNCs) 102, 104, ...which are interconnected by a wired, packet-switched, backbone network. Each one of the RNCs 102, 104, ...serves to control a number of cells of the telecommunication system 100. For example, RNC 102 controls the cells Cᵢ where i typically ranges from 1 to 256. Likewise RNC 104 controls 256 cells Cⱼ.

Each one of the cells Cᵢ has a transceiver station which in the case of UMTS-type networks is also referred to as node B. The node B of cell Cᵢ is referred to as Nᵢ in the following. It is to be noted that in a UMTS-type system a single B can service a plurality of cells.

All of the Nᵢ are connected to the same RNC 102. Likewise the node B of cell Cⱼ is referred to as Nⱼ in the following. All the Nⱼ are connected to the same RNC 104.

Within the cell Cᵢ there is active user equipment 106. User equipment 106 can be any wireless telecommunication device, such as a mobile phone or another electronic device having a UMTS-type air interface. A wireless telecommunication link 108 is established between the user equipment 106 and Nᵢ.

Each one of the RNCs 102, 104, ...together with the respective cells Cᵢ, Cⱼ ... constitutes a sub-system 110, 112, ...of telecommunication system 100. When user equipment 106 is moved within sub-system 110 handovers occur from one of the cells Cⱼ to another one of the cells Cᵢ.

For example if user equipment 106 is currently in the cell C_{i = a} of RNC 102 it receives control information which enables it to select one of the cells C_{i = b} as a handover target cell within the same sub-system 110. This procedure is as such known from the prior art and is specified in the applicable standards as provided by 3GPP GSM/GPRS and UMTS groups.

When user equipment 106 is moved to a boundary cell C_{i = c} of sub-system 110 it can become necessary to perform a handover or reselection procedure from the current sub-system 110 to a neighbouring sub-system 112. In this instance the current sub-system 110 which serves user equipment 106 becomes the "source system" whereas one of the neighbouring sub-system 112 becomes the "target system".

In contrast to the prior art the selection of one of the cells Cⱼ of the sub-system 112 as a handover target is performed by RNC 104 of the target system itself rather than by the RNC 102 of the source system.

In a typical implementation user equipment 106 will not only scan the reception frequency of wireless telecommunication link 108 but the entire frequency band of telecommunication system 100 in order to identify neighbouring cells Cᵢ and/or Cⱼ which also provide coverage for user equipment 106. For example user equipment 106 measures the respective field strengths in order to determine a quality measure of the respective coverages. In addition user equipment 106 receives signalling messages from those neighbouring cells Cᵢ and/or Cⱼ which indicate the respective cell IDs.

However, in a typical UMTS implementation not the cell IDs but a fixed pattern which is scrambled with a code which is unique for each cell is received by the user equipment 106. The user equipment performs measurements on the quality of reception of the pilot channel of the different cells. The cell IDs for neighboring cells have been provided previously by the network by means of signaling messages, together with the information required to carry out the measurements, mainly the frequency and the scrambling code. This way the user equipment is enabled to determine the respective cell IDs on the basis of the scrambled, fixed pattern.

The information, required to perform measurements on neighboring cells, is sent by the network on the broadcast channel of the cell, but it can also be sent to each particular user by its serving RNC or BSC, using a dedicated control channel.

The user equipment only measures those neighbouring cells as commanded by the network. But there is an exception. In the case of UMTS, the user equipment may measure other cells using the same frequency. In this case, the scrambling code is not known, and a procedure called "blind detection" must be used, which is more costly than the normal measurement process. In this case, the user equipment has not received any cell ID from the network, but it can use the scrambling code (detected during this procedure) to identify the cell.

This way a list 114 of potential handover target cells is established by user equipment 106. For example list 114 contains a list of the potential handover target cell IDs with the corresponding field strengths and/or other signalling information.

List 114 is transmitted via wireless telecommunication link 108 to Nᵢ of cell Cᵢ of the source system. From there it is forwarded to RNC 102. When RNC 102 determines that a handover or reselection procedure for user equipment 106 to the target system becomes necessary it forwards a list 116 to RNC 104 of the target system. List 116 contains a list of potential handover target cell IDs of the target system. List 116 can be identical to list 114 or it can be a sub-set of list 114.

RNC 104 has program 118 which receives list 116 as input information. In response program 118 selects one of the target cell IDs of list 116 as a handover target in sub-system 112. Program 118 receives further input information concerning the current state of sub-system 112, in particular the current load of the cells Cⱼ which is provided by the node Bs of the target system 112.

Based on this input information program 118 selects one of the potential handover target cells of list 118 which has sufficient unused capacity in order to accommodate wireless telecommunication link 108. If more than one potential handover target cell having enough free capacity is available, program 118 can select a target cell out of the available potential handover target cells having the lowest load in order to perform load balancing between the cells.

The cell ID of the selected target cell of cells Cⱼ of sub-system 112 is sent from RNC 104 to RNC 102. In response RNC 102 initiates a handover or reselection procedure for user equipment 106 such that wireless telecommunication link 108 is switched over to the target cell with the target cell ID 120 of sub-system 112. This handover or reselection procedure is reliable as the selection of the target cell is based on current status information of the target system itself. It can therefore be guaranteed that the selected target cell is actually in a condition to become a serving cell for the wireless telecommunication link 108. This way an interruption of the wireless telecommunication link 108 during the handover or reselection procedure can be avoided.

Preferably the above described handover is performed in a single procedure where the source system initiates handover, and the target system can either reject the handover or allocate the required resources and accept the handover. This way extra delays are avoided. In the case where a single target system is contacted, the target system can allocate resources in the target system before sending a response to the source system (i.e. the handover has already been initiated). In the case where there are several potential target systems, there are two different possibilities:
- To allocate resources in all systems accepting handover: in this case, each target system allocates the required resources before sending back a response. As the handover will proceed towards only one of the systems, resources in the other ones must be released, either by the source system sending a message towards each target system canceling the handover or by means of a timer.
- To allocate resources only in one of the systems accepting handover. In this case, the source system must explicitly indicate which target system must allocate resources in case it can accept the handover. If this system accepts the handover, the handover procedure goes on as in the case with a single potential target system. Otherwise, the source system must initiate handover (since there is no previous resource allocation) towards one of the systems which are ready to accept the handover.

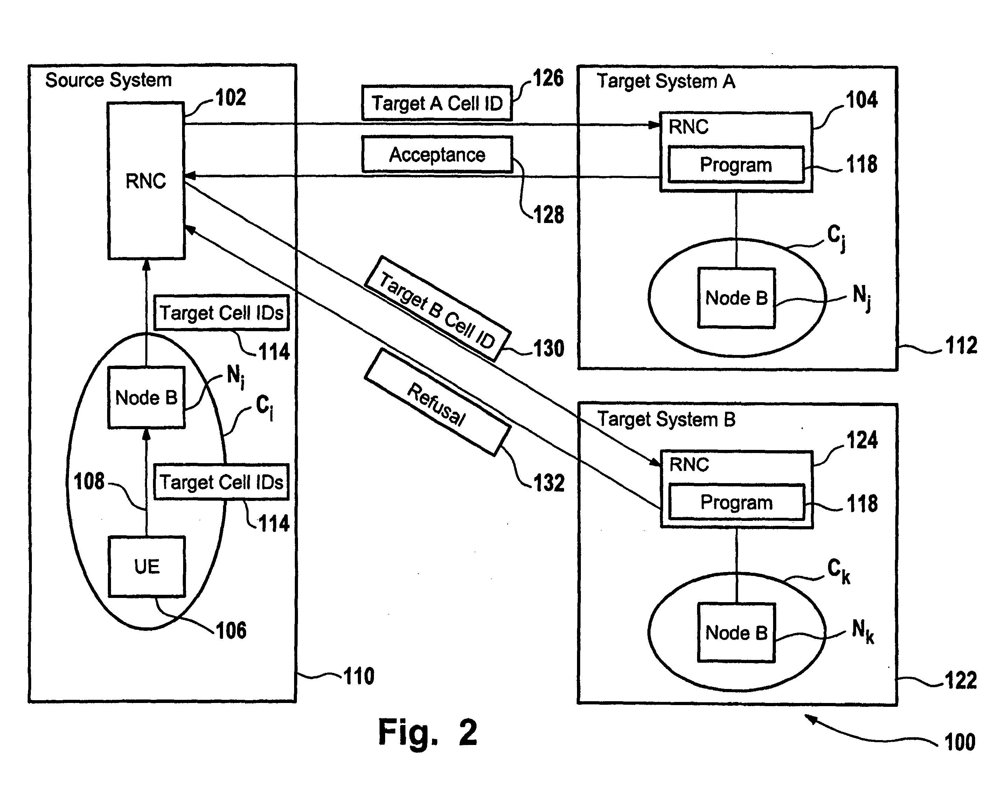

Figure 2 illustrates an alternative mode of operation of telecommunication system 100. In the scenario considered here, user equipment 106 is brought in the vicinity of sub-systems 112 and 122. The design of sub-system 122 is similar to the design of sub-systems 110 and 112. Sub-system 122 has RNC 124 which is connected to a number of Nₖ to establish cells Cₖ. Further RNC 124 has program 118.

As in the example of figure 1 RNC 102 receives list 114 of neighbouring potential handover target cells from Nᵢ. As user equipment 106 is in the proximity of sub-systems 112 and 122 list 114 contains at least one cell ID of a cell Cⱼ of sub-system 112 and one cell ID of a cell Cₖ of sub-system 122. When RNC 102 makes a decision that a handover or reselection of wireless telecommunication link 108 to either sub-system 112 or sub-system 122 is necessary those systems become "target system A" and "target system B", respectively.

For example, RNC 102 sends the cell ID 126 of the potential handover target cell Cⱼ of target system A to RNC 104. In response program 118 checks whether this cell Cⱼ is capable of becoming a serving cell for wireless telecommunication link 108. If this is the case an acceptance 128 is sent from RNC 104 to RNC 102.

In the case of several potential target systems, it is also possible to send a list of cell IDs to each of the target systems and not only a cell ID.

Likewise RNC 102 sends target cell ID 130 of the potential handover target cell Cₖ of target system B to RNC 124. In response program 118 of RNC 124 checks whether this cell Cₖ is capable of becoming a serving cell for the wireless telecommunication link 108. If the cell Cₖ is already running at full capacity refusal 132 is sent from RNC 124 to RNC 102. In response RNC 102 initiates a handover or reselection procedure to cell Cⱼ with target cell ID 126.

When more than one acceptance is received by RNC 102 from the target systems A and B, RNC 102 can make a random selection of the accepted target cell IDs. Alternatively the selection can be based on other criteria such as quality of the coverage, i.e. field strength, load balancing, etc.

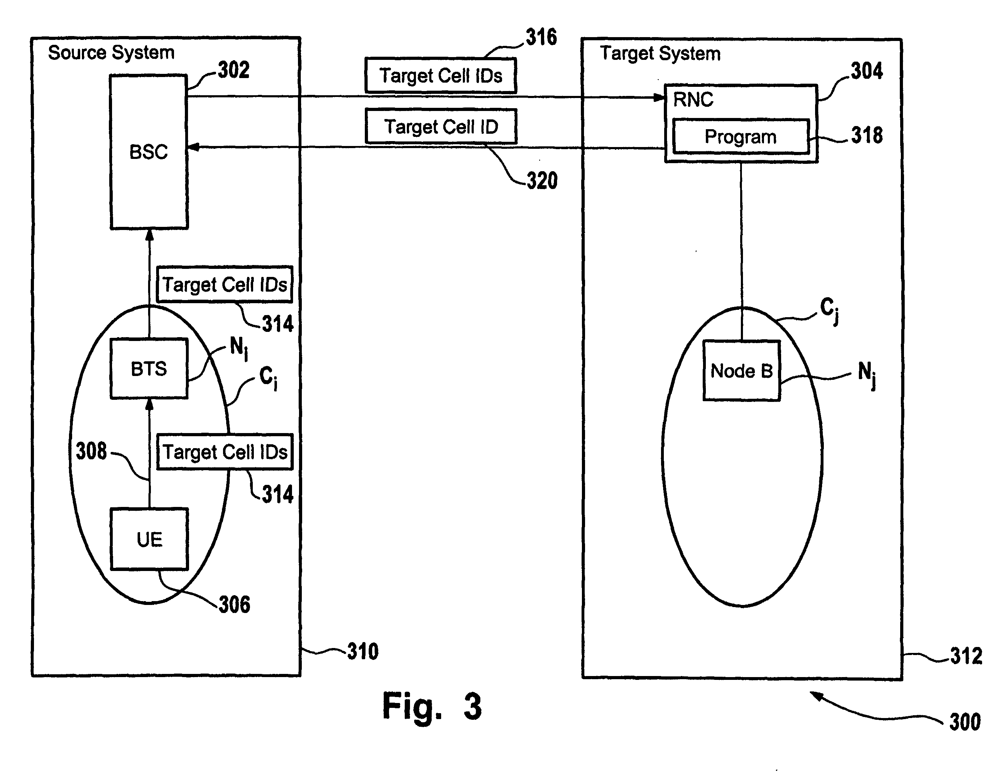

Figure 3 shows a block diagram of telecommunication system 300. Elements of telecommunication system 300 which correspond to elements of telecommunication system 100 of figures 1 and 2 are designated by like reference numerals having added 200.

In contrast to telecommunication system 100 of figures 1 and 2, telecommunication system 300 encompasses at least two different communication standards and air interfaces. For example sub-system 310 is a GSM-type system whereas sub-system 312 is a UMTS-type system. Typically sub-system 310 and 312 will cover at least overlapping areas. User equipment 306 has dual mode capability, i.e. it is capable of establishing wireless telecommunication link 308 in accordance with the GSM standard as well as in accordance with the UMTS standard. For this purpose user equipment 306 has two corresponding air interfaces.

As regards GSM-type sub-system 310 the controller of the sub-system 310 is referred to as "base station controller" (BSC) and the transceiver stations are referred to as "base transceiver stations" (BTS).

As user equipment 306 periodically scans the frequencies of both air interfaces so that the list 314 contains a list of cell IDs of both sub-system 310 and sub-system 312.

When the cell Cᵢ which serves user equipment 306 becomes overloaded or when the entire sub-system 310 becomes overloaded BSC 302 can make the decision that a handover or reselection procedure for link 308 to the alternative air interface is necessary. Such a situation is also referred to as "inter-system handover". Another reason for inter-system handover is better reception from one of the target system cells by the mobile terminal.

In order to initiate the handover or reselection of wireless cellular communication link 308 BSC 302 provides list 316 to RNC 304. List 316 contains one or more cell IDs of potential handover target cells Cⱼ of sub-system 312. Again program 318 selects one of the cells indicated in the list 316 which is capable of becoming a serving cell for the wireless telecommunication link 308. The cell ID 320 of that selected target cell is communicated from RNC 304 to BSC 302. In response 302 initiates an inter-system handover of wireless telecommunication link 308 to the target cell with cell ID 320.

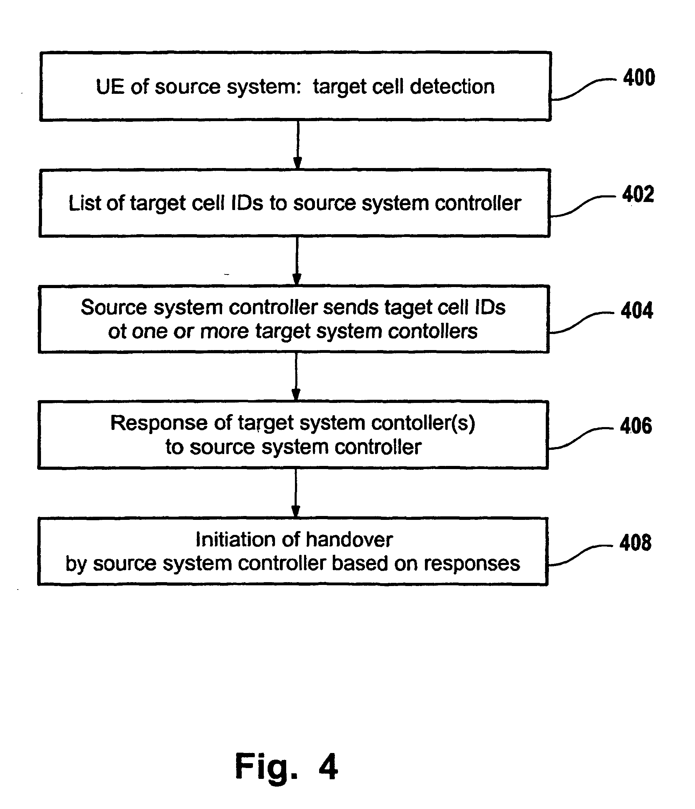

Figure 4 is illustrative of a corresponding flow chart. In step 400 a user equipment of the source system detects potential handover target cells within its vicinity. In step 402 the list of the corresponding target cell IDs is provided to the source system controller, such as a RNC in the case of UMTS or a BSC in the case of GSM.

In step 404 the source system controller sends target cell IDs of potential handover target cells which are outside its scope to one or more target system controllers of the same or a different air interface type. In response a processing routine in the target system is invoked, in order to chose one or more of the possible target cells based on signal strength, cell load, etc.

In step 406 the source system controller receives the responses of the one or more target system controllers. Based on the responses received in step 406 the source system controller initiates a handover or reselection procedure to a target cell which has been selected by one of the target system controllers.

### List of Reference Numerals

- 100: telecommunication system
- 102: radio network controller (RNC)
- 104: radio network controller (RNC)
- 106: user equipment
- 108: wireless telecommunication link
- 110: sub-system
- 112: sub-system
- 114: list
- 116: list
- 118: program
- 120: target cell ID
- 122: sub-system
- 124: RNC
- 126: target cell ID
- 128: acceptance
- 130: target cell _{[RSI2]}
- 132: refusal
- 300: telecommunication system
- 302: base station controller (BSC)

## Claims

1. A method of performing an inter-system handover or reselection procedure for a wireless telecommunication device (106) from a wireless cellular telecommunication source system (110; 310) to a wireless cellular telecommunication target system (112; 122; 312), the source system having a plurality of source system cells and a source system radio network controller (102) for controlling the source system cells, and the target system having a plurality of target system cells and a target system radio network controller (104; 124; 304) for controlling the target system cells, the source system radio network controller being coupled to the target system radio network controller by a wired network, the method comprising the steps of:
- determining of a number of potential handover or reselection target cells of the target system cells by the source system,
- providing of first data being indicative of the target cells from the source system radio network controller to the target system radio network controller,
- selecting of one of the target cells by the target system radio network controller,
- providing of second data being indicative of the selected one of the target cells from the target system to the source system,
- performing a handover or reselection for the wireless telecommunication device from the source system to the selected target cell of the target system.

2. The method of claim 1, whereby the target cells are determined by the wireless telecommunication device and further comprising providing of the first data being indicative of the target cells from the wireless telecommunication device to a controller of the source system.

3. The method of claim 1, whereby the selection of the one of the target cells by the target system is performed based on the available capacity of the target cells.

4. The method of claim 1, whereby the selection of the one of the target cells by the target system is performed for load balancing of the cells of the target system.

5. The method of claim 1, whereby the first data comprises first target cell data being indicative of at least one potential handover or reselection target cell of a first target system and second target cell data being indicative of at least one potential handover target cell of a second target system, whereby the first target cell data is provided to the first target system and the second target cell data is provided to the second target system for selection of target cells by the first and second target systems.

6. The method of claim 1, whereby the wireless telecommunication device has dual mode capability for communication by means of first and second air interfaces, the source system having the first air interface and the target system having the second air interface, further comprising changing the mode of the wireless telecommunication device when the handover or reselection is performed.

7. A source system radio network controller for a wireless cellular telecommunication source system (110; 310) for performing an inter-system handover or reselection procedure for a wireless telecommunication device from the wireless cellular telecommunication source system to a wireless cellular telecommunication target system (112; 122; 312), the source system having a plurality of source system cells being controlled by the source system radio network controller (102), and the target system having a plurality of target system cells and a target system radio network controller (104; 124; 304) for controlling the target system cells, the source system radio network controller being coupled to the target system radio network controller by a wired network, the source system radio network controller comprising:
- air interface means for receiving of first data (114) being indicative of a number of potential handover or reselection target cells of the target system cells (112, 122; 312) from the wireless telecommunication device (106; 306),
- means (102) for providing of the first data to the target system radio network controller,
- means (102) for receiving of second data being indicative of one of the target cells which has been selected by the target system radio network controller,
- means (102) for performing a handover or reselection of the wireless telecommunication device from the source system to the selected one of the target cells of the target system.

8. A target system radio network controller for a wireless cellular telecommunication target system(112; 122;312) for performing an inter-system handover or reselection procedure for a wireless telecommunication device (106) from a wireless cellular telecommunication source system (110; 310) to the wireless cellular telecommunication target system, the source system having a plurality of source system cells and a source system radio network controller (104) for controlling the source system cells, and the target system having a plurality of target system cells being controlled by the target system radio network controller (104; 124; 304), the source system radio network controller being coupled to the target system radio network controller by a wired network, the target system radio network controller comprising:
- means (104) for receiving of first data being indicative of potential handover or reselection target cells of the target system cells (112; 122; 312) from the source system radio network controller(110; 310),
- means (118) for selecting one of the target cells,
- means for providing of second data (120; 128, 132; 320) being indicative of the one of the target cells which has been selected to the source system radio network controller.

9. A wireless cellular telecommunication system comprising a source system radio network controller of claim 7 and a target system radio network controller of claim 8.

## Patentansprüche

1. Verfahren zur Durchführung einer Handover- oder Wiederwahlprozedur zwischen Systemen für ein Mobilfunkgerät (106) von einem Mobilfunk-Quellensystem (110; 310) an ein Mobilfunk-Zielsystem (112; 122; 312), wobei das Quellensystem eine Mehrzahl von Quellensystem-Funkzellen und einen Radio Network Controller (102) des Quellensystems zum Steuern der Quellensystem-Funkzellen aufweist und das Zielsystem eine Mehrzahl von Zielsystem-Funkzellen und einen Radio Network Controller (104; 124; 304) des Zielsystems zum Steuern der Zielsystem-Funkzellen aufweist, wobei der Radio Network Controller des Quellensystems an den Radio Network Controller des Zielsystems durch ein Festnetz gekoppelt wird, wobei das Verfahren die Schritte umfaßt:
- Bestimmen mehrerer potentieller Handover- oder Wiederwahl-Zielfunkzellen der Zielsystem-Funkzellen durch das Quellensystem,
- Bereitstellen erster Daten, die die Zielfunkzellen von dem Radio Network Controller des Quellensystems bezeichnen, an den Radio Network Controller des Zielsystems,
- Auswählen einer der Zielfunkzellen durch den Radio Network Controller des Zielsystems,
- Bereitstellen zweiter Daten, die die ausgewählte eine der Zielfunkzellen bezeichnen, von dem Zielsystem an das Quellensystem,
- Durchführen eines Handover oder einer Wiederwahl für das Mobilfunkgerät von dem Quellensystem an die ausgewählte Zielfunkzelle des Zielsystems.

2. Verfahren nach Anspruch 1, durch welches die Zielfunkzellen von dem Mobilfunkgerät bestimmt werden und außerdem umfassend das Bereitstellen der ersten Daten, die die Zielfunkzellen bezeichnen, von dem Mobilfunkgerät an einen Controller des Quellensystems.

3. Verfahren nach Anspruch 1, durch welches die Auswahl einer der Zielfunkzellen durch das Zielsystem auf der Basis der verfügbaren Kapazität der Zielfunkzellen durchgeführt wird.

4. Verfahren nach Anspruch 1, durch welches die Auswahl der einen der Zielfunkzellen durch das Zielsystem zur Lastverteilung der Funkzellen des Zielsystems durchgeführt wird.

5. Verfahren nach Anspruch 1, durch welches die ersten Daten erste Zielfunkzellendaten, die mindestens eine potentielle Handover- oder Wiederwahl-Zielfunkzelle eines ersten Zielsystems bezeichnen, und zweite Zielfunkzellendaten, die mindestens eine Handover-Zielfunkzelle eines zweiten Zielsystems bezeichnen, umfassen, durch welches die ersten Zielfunkzellendaten an das erste Zielsystem bereitgestellt werden und die zweiten Zielfunkzellendaten an das zweite Zielsystem zur Auswahl der Zielfunkzellen durch das erste und das zweite Zielsystem bereitgestellt werden.

6. Verfahren nach Anspruch 1, durch welches das Mobilfunkgerät die Dual-Mode-Fähigkeit zur Kommunikation mittels der ersten und der zweiten Luftschnittstelle aufweist, wobei das Quellensystem die erste Luftschnittstelle aufweist und das Zielsystem die zweite Luftschnittstelle aufweist, außerdem umfassend das Ändern des Mode des Mobilfunkgerätes, wenn das Handover oder die Wiederwahl durchgeführt wird.

7. Radio Network Controller des Quellensystems für ein Mobilfunk-Quellensystem (110; 310) zum Durchführen einer Handover- oder Wiederwahlprozedur zwischen Systemen für ein Mobilfunkgerät von dem Mobilfunk-Quellensystem an ein Mobilfunk-Zielsystem (112; 122; 312), wobei das Quellensystem eine Mehrzahl von Quellensystem-Funkzellen aufweist, die durch den Radio Network Controller (102) des Quellensystems gesteuert werden, und das Zielsystem eine Mehrzahl von Zielsystem-Funkzellen und einen Radio Network Controller (104; 124; 304) des Zielsystems zum Steuern der Zielsystem-Funkzellen aufweist, wobei der Radio Network Controller des Quellensystems an den Radio Network Controller des Zielsystems durch ein Festnetz gekoppelt wird, wobei der Radio Network Controller des Quellensystems umfaßt:
- Luftschnittstellenmittel zum Empfangen der ersten Daten (114), die mehrere potentielle Handover- oder Wiederwahl-Zielfunkzellen der Zielsystem-Funkzellen (112, 122; 312) bezeichnen, von dem Mobilfunkgerät (106; 306),
- Mittel (102) zum Bereitstellen der ersten Daten an den Radio Network Controller des Zielsystems,
- Mittel (102) zum Empfangen der zweiten Daten, die eine der Zielfunkzellen bezeichnen, die durch den Radio Network Controller des Zielsystems ausgewählt wurde,
- Mittel (102) zum Durchführen eines Handover oder einer Wiederwahl des Mobilfunkgerätes von dem Quellensystem an die ausgewählte eine der Zielfunkzellen des Zielsystems.

8. Radio Network Controller des Zielsystems für ein Mobilfunk-Zielsystem(112; 122; 312) zum Durchführen einer Handover- oder Wiederwahlprozedur zwischen Systemen für ein Mobilfunkgerät (106) von einem Mobilfunk-Quellensystem (110; 310) an das Mobilfunk-Zielsystem, wobei das Quellensystem eine Mehrzahl von Quellensystem-Funkzellen und einen Radio Network Controller (104) des Quellensystems zum Steuern der Quellensystem-Funkzellen aufweist, und das Zielsystem eine Mehrzahl von Zielsystem-Funkzellen aufweist, die durch den Radio Network Controller (104; 124; 304) des Zielsystems gesteuert werden, wobei der Radio Network Controller des Quellensystems an den Radio Network Controller des Zielsystems durch ein Festnetz gekoppelt wird, wobei der Radio Network Controller des Zielsystems umfaßt:
- Mittel (104) zum Empfangen von ersten Daten, die potentielle Handover- oder Wiederwahl-Zielfunkzellen der Zielsystem-Funkzellen (112; 122; 312) bezeichnen, von dem Radio Network Controller (110; 310) des Quellensystems,
- Mittel (118) zum Auswählen einer der Zielfunkzellen,
- Mittel zum Bereitstellen von zweiten Daten (120; 128, 132; 320), die eine der Zielfunkzellen bezeichnen, welche ausgewählt wurde, an den Radio Network Controller des Quellensystems.

9. Mobilfunksystem, umfassend einen Radio Network Controller des Quellensystems nach Anspruch 7 und einen Radio Network Controller des Zielsystems nach Anspruch 8.

## Revendications

1. Procédé d'exécution d'une procédure de transfert ou de resélection entre systèmes pour un appareil de télécommunications sans fil (106) depuis un système source de télécommunications cellulaire sans fil (110 ; 310) jusqu'à un système cible de télécommunications cellulaire sans fil (112 ; 122 ; 312), le système source ayant une pluralité de cellules du système source et un contrôleur de réseau radio de système source (102) pour contrôler les cellules du système source, et le système cible ayant une pluralité de cellules du système cible et un contrôleur de réseau radio de système cible (104 ; 124 ; 304) pour contrôler les cellules du système cible, le contrôleur de réseau radio de système source étant couplé au contrôleur de réseau radio de système cible par un réseau câblé, le procédé comprenant les étapes consistant à :
- déterminer un certain nombre de cellules cibles de transfert ou de resélection potentielles parmi les cellules du système cible par l'intermédiaire du système source,
- fournir au contrôleur de réseau radio de système cible les premières données indicatives des cellules cibles du contrôleur de réseau radio à partir du système source,
- choisir une des cellules cibles par l'intermédiaire du contrôleur de réseau radio de système cible,
- fournir au système source les secondes données indicatives des cellules cibles choisies à partir du système cible,
- effectuer un transfert ou une resélection pour l'appareil de télécommunications sans fil du système source en direction de la cellule cible choisie du système cible,

2. Procédé selon la revendication 1, par lequel les cellules cibles sont déterminées par l'appareil de télécommunications sans fil et comprenant, en outre, l'étape consistant à fournir à un contrôleur du système source les premières données indicatives des cellules cibles à partir de l'appareil de télécommunications sans fil.

3. Procédé selon la revendication 1, par lequel la sélection des cellules cibles par le système cible est effectuée sur la base de l'équilibrage de charge des cellules du système cible.

4. Procédé selon la revendication 1, par lequel la sélection des cellules cibles par le système cible est effectuée pour l'équilibrage de charge des cellules du système cible.

5. Procédé selon la revendication 1, par lequel les premières données comprennent les premières données des cellules cibles indicatives d'au moins une cellule cible de transfert ou de resélection potentielle d'un premier système cible et les secondes données des cellules cibles indicatives d'au moins une cellule cible de transfert potentielle d'un second système cible, par lequel les premières données des cellules cibles sont fournies au premier système cible et les secondes données des cellules cibles sont fournies au second système cible pour la sélection des cellules cibles par les premier et second systèmes cibles.

6. Procédé selon la revendication 1, par lequel l'appareil de télécommunications sans fil a la fonctionnalité de mode mixte pour la transmission au moyen des première et seconde interfaces radio, le système source ayant la première interface radio et le système cible ayant la seconde interface radio, comprenant, en outre, l'étape consistant à changer le mode de l'appareil de télécommunications sans fil quand le transfert ou la resélection est effectuée.

7. Contrôleur de réseau radio de système source pour un système source de télécommunications cellulaire sans fil (110; 310) permettant d'exécuter une procédure de transfert ou de resélection entre systèmes pour un appareil de télécommunications sans fil depuis le système source de télécommunications cellulaire sans fil jusqu'à un système cible de télécommunications cellulaire sans fil (112 ; 122 ; 312), le système source ayant une pluralité de cellules du système source contrôlées par le contrôleur de réseau radio de système source (102), et le système cible ayant une pluralité de cellules du système cible et un contrôleur de réseau radio de système cible (104 ; 124 ; 304) pour contrôler les cellules du système cible, le contrôleur de réseau radio de système source étant couplé au contrôleur de réseau radio de système cible par un réseau cilblé, le contrôleur de réseau radio de système source comprenant :
- des moyens d'interface radio pour recevoir les premières données (114) indicatives d'un certain nombre de cellules cibles de transfert ou de resélection potentielles parmi les cellules du système cible (112, 122 ;312) à partir de l'appareil de télécommunications sans fil (106 ; 306),
- des moyens (102) pour fournir les premières données au contrôleur de réseau radio de système cible,
- des moyens (102) pour recevoir les secondes données indicatives d'une des cellules cibles qui a été choisie par le contrôleur de réseau radio de système cible,
- des moyens (102) pour effectuer un transfert ou une resélection de l'appareil de télécommunications sans fil depuis le système source jusqu'à celle des cellules cibles du système cible qui a été choisie.

8. Contrôleur de réseau radio de système cible pour un système cible de télécommunications cellulaire sans fil (112 ; 122 ; 312) pour exécuter une procédure de transfert ou de resélection entre systèmes pour un appareil de télécommunications sans fil (106) depuis un système source de télécommunications cellulaire sans fil (110 : 310) jusqu'au système cible de télécommunications cellulaire sans fil, le système source ayant une pluralité de cellules du système source et un contrôleur de réseau radio de système source (104) pour contrôler les cellules du système source, et le système cible ayant une pluralité de cellules du système cible contrôlées par le contrôleur de réseau radio de système cible (104 ; 124 ; 304), le contrôleur de réseau radio de système source étant couplé au contrôleur de réseau radio de système cible par un réseau câblé, le contrôleur de réseau radio de système cible comprenant :
- des moyens (104) pour recevoir les premières données indicatives des cellules cibles de transfert ou de resélection potentielles des cellules du système cible (112, 122 ; 312) du contrôleur de réseau radio de système source (110 ; 310),
- des moyens (118) pour choisir une des cellules cibles,
- des moyens pour fournir au contrôleur de réseau radio de système source les secondes données (120 ; 128, 132 ; 320) indicatives de celle des cellules cibles qui a été choisie.

9. Système de télécommunications cellulaire sans fil comprenant un contrôleur de réseau radio de système source selon la revendication 7 et un contrôleur de réseau radio de système cible selon la revendication 8.
